(19)

Europäisches
Patentamt
European
Patent Office
Office européen
des brevets

(11) **EP 2 857 361 A1**

(12) **EUROPEAN PATENT APPLICATION**
published in accordance with Art. 153(4) EPC

(43) Date of publication:
**08.04.2015 Bulletin 2015/15**

(21) Application number: **13793562.3**

(22) Date of filing: **24.05.2013**

(51) Int Cl.:
*C02F 1/58* (2006.01)    *C01B 25/00* (2006.01)
*C01B 33/24* (2006.01)    *C05B 7/00* (2006.01)
*C05F 7/00* (2006.01)

(86) International application number:
**PCT/JP2013/064444**

(87) International publication number:
**WO 2013/176244 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.05.2012  JP 2012120260**

(71) Applicants:
• **Taiheiyo Cement Corporation**
**Tokyo 135-8578 (JP)**
• **Onoda Chemical Industry Co., Ltd.**
**Tokyo 100-0004 (JP)**

(72) Inventors:
• **Tsuyoshi Aketo**
**Osaku 2-chome, Sakura-shi, Chiba (JP)**
• **Yusaku Amamoto**
**Osaku 2-chome, Sakura-shi, Chiba (JP)**
• **Nobutaka Minowa**
**Chiyoda-ku, Tokyo (JP)**
• **Hiroshi Nakamura**
**Miyamotocho, Itabashi-ku Tokyo (JP)**
• **Yasumasa Nishimura**
**Miyamotocho, Itabashi-ku Tokyo (JP)**

(74) Representative: **Isarpatent**
**Patent- und Rechtsanwälte**
**Friedrichstrasse 31**
**80801 München (DE)**

(54) **PHOSPHORUS RECOVERY MATERIAL, METHOD FOR PRODUCING PHOSPHORUS RECOVERY MATERIAL, AND PHOSPHORUS RECOVERY METHOD**

(57)    The present invention provides a phosphorus recovery material which can recover phosphorus without requiring decarbonation treatment from water containing phosphorus and carbonic acid and has excellent fixing ability of phosphorus and sedimentation property after fixation of phosphorus, a method for producing the phosphorus recovery material and a phosphorus recovery method.

The present invention provides, for example, a phosphorus recovery material including an amorphous calcium silicate hydrate single substance or a complex between amorphous calcium silicate hydrate and Ca(OH)$_2$, produced by mixing a sodium silicate aqueous solution and lime without heating, wherein the hydrate single substance or the complex has a Ca/Si molar ratio of 0.8 to 1.5.

Fig. 1

EP 2 857 361 A1

**Description**

TECHNICAL FIELD

The present invention relates to a phosphorus recovery material which allows efficient recovery of phosphorus from water containing phosphorus and carbonic acid, a method of production of the phosphorus recovery material and a phosphorus recovery method.

BACKGROUND ART

Phosphorus removing materials (phosphorus recovery materials) containing calcium silicate as a main component have been known. The phosphorus removing materials exhibit an effect of fixing and removing phosphorus in water by generation of calcium phosphate after reaction of calcium silicate in the phosphorus removing materials with phosphorus in water. A phosphorus removing material is disclosed in Patent Literature 1, for example, which is a water treatment agent obtained by heating a substance containing, as a main component, amorphous calcium silicate hydrate having a $CaO/SiO_2$ molar ratio of 1.5 to 5 at 50 to 700°C. Patent Literature 2 discloses a material for removing phosphorus from sewage water, which is made of amorphous calcium silicate hydrate obtained by hydrothermal reaction, under high pressure and high temperature, of a raw material obtained by adding a foaming agent to water slurry containing a siliceous raw material and a calcareous raw material as main components. In addition, Patent Literature 3 discloses a phosphorus removing material which contains amorphous calcium silicate hydrate as a main component and is molded to the shape of spheres or hollow objects having a diameter of a few millimeters. Patent Literature 4 discloses a method for removing phosphorus with the use of wollastonite.

Conventional phosphorus removing materials containing calcium silicate as a main component have, however, low reaction rate with phosphorus, although the problems such as dewaterability of a recovered material and contamination of organic materials may be avoided in some extent. Therefore in order to increase the concentration of phosphorus in the recovered material, an extended reaction time is required.

In addition, the recovered material contains a low amount of phosphorus, and thus cannot be effectively used as phosphate fertilizers. Moreover, there has been a problem of reaction of carbonic acid in phosphorus-containing water with calcium in calcium silicate, resulting in consumption of calcium which should be essentially used for reaction with phosphorus and thus production of calcium carbonic acid.

Phosphorus recovery materials which aim to solve the above problems have been proposed, which include a phosphorus recovery material including porous amorphous calcium silicate hydrate fine powder having an average particle diameter(median diameter) of 150 $\mu$m or less and a pore volume of 0.3 $cm^3/g$ or more (Patent Literature 5) and a phosphorus recovery material including porous amorphous calcium silicate hydrate having an average particle diameter (median diameter) of 10 $\mu$m or more and 150 $\mu$m or less, a BET specific surface area of 80 $m^2/g$ or more and a pore volume of 0.5 $cm^3/g$ or more (Patent Literature 6).

The phosphorus recovery materials disclosed in Patent Literatures 5 and 6 are advantageous in that the materials have high reactivity with phosphorus, can produce hydroxyapatite to rapidly reduce the phosphorus concentration in waste water and have an increased recovery rate of phosphorus compared to other calcareous materials such as slaked lime. However, the phosphorus recovery materials still do not have sufficient fixing ability of phosphorus in water containing phosphorus and carbonic acid.

Thus phosphorus treatment methods or phosphorus removal methods of water containing phosphorus and carbonic acid have been proposed.

For example, Patent Literature 7 proposes a method of treatment of phosphorus-containing waste water comprising adding an alkali to waste water containing phosphorus and carbonic acid in the presence of calcium ions to precipitate phosphorus as an insoluble substance and separating sludge containing the insoluble phosphorus from treated water, wherein an acid is added to the waste water containing phosphorus and carbonic acid to adjust pH to 5 or less before aeration treatment and thus decarbonation.

Patent Literature 8 proposes a method for removing phosphorus from phosphorus-containing water by providing a flow of raw water containing phosphorus through a reaction tank which is filled with a phosphorus removing material mainly containing calcium silicate hydrate as a seed crystal or in which the material is fluidized, thereby allowing removal of phosphorus from the raw water by crystallization reaction, wherein decarbonation is done by adjusting pH to 4 to 5 through adding sulfuric acid.

However, the above-mentioned decarbonation methods require additional chemical costs because an acid is added to water containing phosphorus and carbonic acid for adjusting pH, and require additional treatment processes and facilities for decarbonation treatment. Therefore these methods increase treatment processes and costs for facilities.

Patent Literature 1: Japanese Patent Application Laid-open No. S61-263636

Patent Literature 2: Japanese Examined Publication No. H02-020315
Patent Literature 3: Japanese Patent Application Laid-open No. H10-235344
Patent Literature 4: Japanese Patent Application Laid-open No. 2000-135493
Patent Literature 5: Japanese Patent Application Laid-open No. 2009-285635
Patent Literature 6: Japanese Patent Application Laid-open No. 2009-285636
Patent Literature 7: Japanese Patent Application Laid-open No. 2004-174386
Patent Literature 8: Japanese Patent No. 3569086

## DISCLOSURE OF THE INVENTION

Thus the present invention provides a phosphorus recovery material which maintains advantages of the above-mentioned phosphorus recovery materials, can recover phosphorus without requiring decarbonation treatment from water containing phosphorus and carbonic acid and has excellent fixing ability of phosphorus and sedimentation property after fixation of phosphorus, a method for producing the phosphorus recovery material and a phosphorus recovery method.

The present invention encompasses a phosphorus recovery material having the following components and the like.

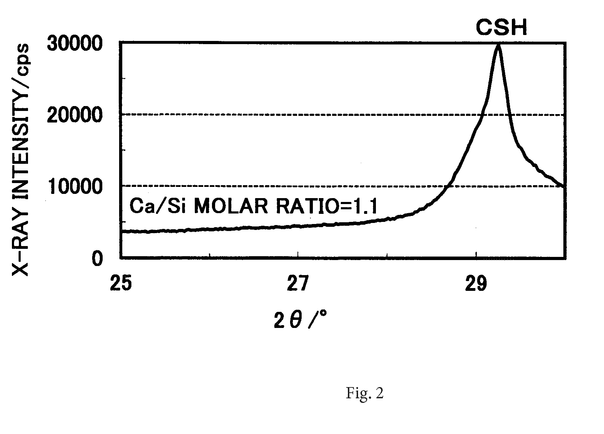

[1] A phosphorus recovery material comprising an amorphous calcium silicate hydrate single substance or an complex between amorphous calcium silicate hydrate and $Ca(OH)_2$, produced by mixing a sodium silicate aqueous solution and lime without heating, wherein the hydrate single substance or the complex has a Ca/Si molar ratio of 0.8 to 1.5. Amorphous calcium silicate hydrate (single substance) refers to calcium silicate hydrates except for tobermorite and xonotlite which are crystalline, and includes a calcium silicate hydrate shown in Fig. 2, for example, which has a maximum peak at $2\theta = 29.2°$ and has low crystallinity.

[2] The phosphorus recovery material according to the above [1], having a phosphorus fixation index of 70% or more.

[3] The phosphorus recovery material according to the above [1] or [2], having a sedimentation index of 95% or more.

[4] A method for producing a phosphorus recovery material, comprising mixing a sodium silicate aqueous solution and lime without heating to produce an amorphous calcium silicate hydrate single substance or a complex between the amorphous calcium silicate hydrate and $Ca(OH)_2$ having a Ca/Si molar ratio of 0.8 to 1.5.

[5] A phosphorus recovery method comprising mixing water containing phosphorus and carbonic acid and the phosphorus recovery material according to any one of the above [1] to [3], separating solid and liquid and recovering phosphorus as a solid matter.

[6] The phosphorus recovery method according to the above [5], wherein the phosphorus recovery material in the form of slurry is used.

The phosphorus recovery material of the present invention can exhibit the following effects:

(i) The phosphorus recovery material has high ability of fixing phosphorus in water containing phosphorus and carbonic acid; and

(ii) The flocculate produced after fixation of phosphorus have excellent sedimentation property.

Therefore the phosphorus recovery material of the present invention has an increased recovery capability of phosphorus.

The production method of the phosphorus recovery material of the present invention can exhibit the following effects:

(i) Because the method uses a sodium silicate aqueous solution as a raw material, insoluble substances other than amorphous calcium silicate hydrate and $Ca(OH)_2$ are not produced in the reaction solution. Thus the amorphous calcium silicate hydrate single substance or the complex between amorphous calcium silicate hydrate and $Ca(OH)_2$ is produced at a high purity and the reaction solution (slurry) can be directly used as the phosphorus recovery material.

(ii) Because the hydrate and $Ca(OH)_2$ are produced at normal temperature, hydrothermal synthesis at a high temperature is not required unlike conventional amorphous calcium silicate hydrate, thus production is easy and requires low production costs.

The phosphorus recovery method of the present invention does not require decarbonation treatment of water containing phosphorus and carbonic acid. In addition, the method can shorten separation time of the phosphorus recovery material after fixation of phosphorus because a mixed liquid of the phosphorus-containing water and the phosphorus recovery material has excellent filterability.

BRIEF DESCRIPTION OF THE DRAWINGS

Fig. 1 is a flow chart showing an example of the production method of the present invention; and
Fig. 2 is an XRD chart of an amorphous calcium silicate hydrate single substance produced in Example 1.

BEST MODE FOR CARRYING OUT THE INVENTION

The present invention is hereinafter described respectively on the phosphorus recovery material, the production method thereof and the phosphorus recovery method. Hereinafter the amorphous calcium silicate hydrate single substance is referred to as "CSH" and the complex between amorphous calcium silicate hydrate and $Ca(OH)_2$ is referred to as "CSH complex".

1. Phosphorus recovery material

The phosphorus recovery material of the present invention comprising a CSH or CSH complex obtained by reaction between a sodium silicate aqueous solution (water glass) and lime. The phrase "mix a sodium silicate aqueous solution and lime" encompasses both addition of lime to the sodium silicate aqueous solution for mixing and, inversely, addition of the sodium silicate aqueous solution to lime for mixing.

The CSH and the CSH complex have a Ca/Si molar ratio of 0.8 to 1. 5 and preferably 1.0 to 1.3. When the value is within the range of 0.8 to 1.5, decarbonation treatment of water containing phosphorus and carbonic acid is not required and the phosphorus recovery material has both high fixing ability of phosphorus and high sedimentation property. In fact, the content of $Ca(OH)_2$ in the complex is about 10 wt% when the Ca/Si molar ratio is 1.5.

The water containing phosphorus and carbonic acid is not particularly limited as far as it is water containing phosphorus and carbonic acid. For example, at 1 atmosphere and 20°C, the water preferably has a total carbonic acid concentration in terms of $CO_2$ of 200 mg/L or more, more preferably 500 mg/L or more and still more preferably 1000 mg/L or more. The term "total carbonic acid " collectively refers to carbonic acid ($H_2CO_3$), bicarbonate ($HCO_3^-$) and carbonate ($CO_3^{2-}$).

The sodium silicate aqueous solution may be the one commercially available. The lime may be any of slaked lime and quick lime.

When lime is added to the sodium silicate aqueous solution at an amount exceeding the amount (equivalent) of lime that produces CSH, CSH incorporates $Ca(OH)_2$ produced by excess lime to give a complex containing $Ca(OH)_2$ dispersed in CSH. The complex has an improved sedimentation property compared to a mixture obtained by simply mixing $Ca(OH)_2$ with CSH which is obtained by mixing equivalent amounts of a sodium silicate aqueous solution and lime and thus does not contain $Ca(OH)_2$.

The phosphorus recovery material of the present invention preferably has a phosphorus fixation index of 70% or more and more preferably 75% or more. When the value is 70% or more, the phosphorus recovery material after fixation of phosphorus has sufficiently high phosphorus content and thus can be directly used as a phosphate fertilizer having high fertilizer effect or as a raw material thereof.

The phosphorus fixation index (R) under various treatment conditions is calculated according to the following equation:

$$R = 100 \times (P_0 - P)/P_0$$

wherein R represents a phosphorus fixation index (%); $P_0$ represents a phosphorus concentration (mg/L) in phosphorus-containing water before addition of a phosphorus recovery material; and P represents a phosphorus concentration (mg/L) in phosphorus-containing water (including the filtrate thereof) after addition of the phosphorus recovery material and recovery of phosphorus.

The phosphorus recovery material of the present invention preferably has a sedimentation index of 95% or more and more preferably 97% or more. When the value is 95% or more, the phosphorus recovery material can be easily separated after fixation of phosphorus and the amount of liquid to be filtered in slurry (reaction solution) of the phosphorus recovery material can be reduced. When a supernatant contains an extremely low amount of phosphorus-containing suspended substances, the supernatant can be discharged to outside without filtration as far as the supernatant meets the regulation levels for other suspended or floating substances (SS) or chemical components.

The sedimentation index is determined according to (i) to (v) below:

(i) A phosphorus recovery material and 100 mL of phosphorus-containing water having a known phosphorus concentration ($P_0$) are mixed so that the amount of calcium in the phosphorus recovery material and the amount of phosphorus in the phosphorus-containing water satisfies a Ca/P molar ratio of 2, while maintaining the liquid temperature at 20°C for 1 hour to prepare a mixed liquid.

(ii) A portion (5 mL) of the mixed liquid is filtered and the filtrate is measured for the phosphorus concentration ($P_1$) and the phosphorus fixation index ($R_1$) is determined. The phosphorus concentration can be measured, for example, according to the molybdenum blue absorptiometry defined in JIS K 0102 "Testing methods for industrial wastewater".

(iii) The residual mixed liquid is left to stand for 1 hour followed by decantation to separate the upper layer suspension liquid (60 mL).

(iv) Hydrochloric acid is added to the separated suspension liquid to adjust pH to 1 followed by stirring to dissolve the suspended substances. Thereafter the solution is measured for the phosphorus concentration ($P_2$) and the phosphorus fixation index ($R_2$) is determined.

(v) The sedimentation index (S) is calculated according to the following equation:

$$S(\%) = \{1 - (R_1 - R_2)/R_1\} \times 100$$

Further, the phosphorus recovery material of the present invention preferably has a BET specific surface area of 30 to 80 $m^2$/g and a pore volume of 0.1 to 0.3 $cm^3$/g. When the BET specific surface area and the pore volume are within the above ranges, the fixing ability of phosphorus is further increased.

2. Production method of phosphorus recovery material

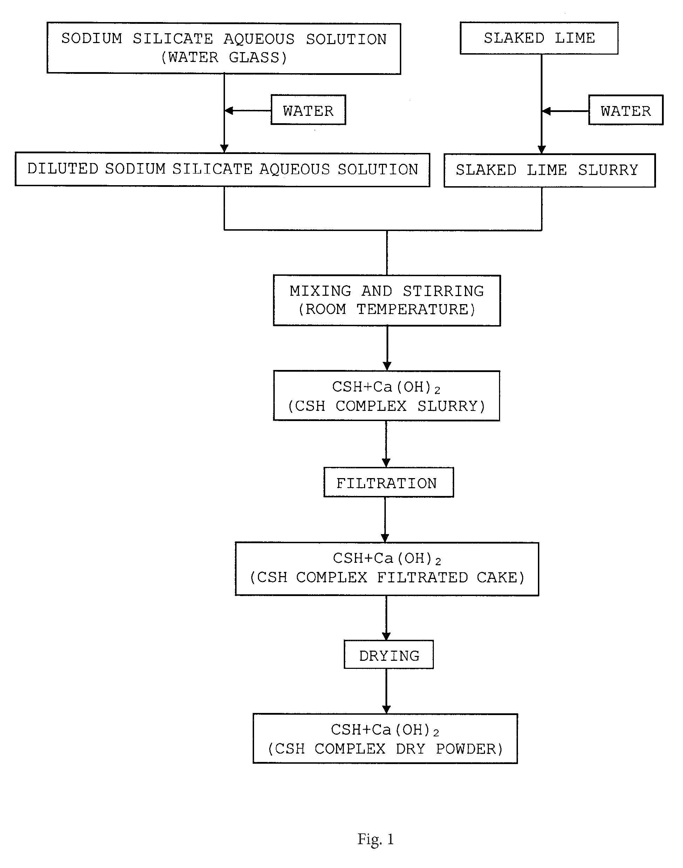

The production method is the one in which a sodium silicate aqueous solution and lime are mixed without heating to produce the CSH or the CSH complex having a Ca/Si molar ratio of 0.8 to 1.5. For recovery of phosphorus, the reaction solution containing the produced CSH or CSH complex may be directly used, or a dried material (including powder) may be used that is obtained by drying the CSH or CSH complex separated from the reaction solution. Fig. 1 shows an exemplary production method of the dried phosphorus recovery material.

Because the sodium silicate aqueous solution contains a low amount of impurities, insoluble substances other than CSH and Ca(OH)$_2$ are rarely produced during the production process. Therefore when the CSH or CSH complex is separated, a process of separating other insoluble substances from the separated CSH or CSH complex is not required and thus the production process can be simplified for that process.

When the sodium silicate aqueous solution has high viscosity, the aqueous solution is diluted with water. Lime may be used in the form of slurry in order to avoid generation of flocs upon mixing thereof with the sodium silicate aqueous solution. The raw materials are preferably mixed while stirring in order to obtain uniform reaction. The reaction proceeds at room temperature and thus in principle heating is not required during the mixing (reaction) process.

The mixing time of the sodium silicate aqueous solution and lime is preferably 10 to 120 minutes and more preferably 15 to 60 minutes. When the mixing period is less than 10 minutes, the reaction between the sodium silicate solution and lime does not sufficiently proceed and the mixing period of longer than 120 minutes is economically disadvantageous.

The amount of lime to be mixed is an amount so as to obtain the CSH or CSH complex having a Ca/Si molar ratio of 0.8 to 1.5 and preferably 1.0 to 1.3.

3. Phosphorus recovery method

The recovery method is the one in which water containing phosphorus and carbonic acid and a CSH or CSH complex (phosphorus recovery material) having a Ca/Si molar ratio of 0.8 to 1.5 are mixed, liquid and solid are separated and phosphorus is recovered as a solid matter.

The water containing phosphorus and carbonic acid is not particularly limited and includes filtrate of excess sludge from sewage treatment plants, separated water from sludge after anaerobic digestion and industrial wastewater containing phosphorus.

The CSH and CSH complex can be used for phosphorus recovery in the form of slurry, a dewatered cake or a dried material (including powder). It is preferable, however, that the CSH and CSH complex are used in the form of slurry (including paste) because the CSH and CSH complex in the form of powder may cause white turbidity and because the production process of the phosphorus recovery material can be simplified. Use of the CSH and CSH complex in the form of slurry may omit the necessity of dehydrators or driers, and thus phosphorus recovery can be carried out while producing the phosphorus recovery material with a simple apparatus for production of the phosphorus recovery material installed *in situ* (for example at sewage treatment plants or industrial plants). In this case, the phosphorus recovery material may not be deteriorated (carbonation).

The slurry of the CSH or CSH complex may be prepared by dispersing the CSH or CSH complex in the form of powder into water or may be the reaction solution *per se* containing the CSH or CSH complex, as described above.

The mixing time of water containing phosphorus and carbonic acid and the CSH or CSH complex in the form of powder or slurry is, although it may depend on the amount to be mixed, preferably 5 minutes or more and more preferably 15 minutes or more. The temperature of the liquid to be mixed is not particularly limited and may generally be room temperature.

The phosphorus recovery material after fixation of phosphorus is separated by filtration, sedimentation, centrifugation or the like. The separated phosphorus recovery material contains high amount of phosphorus and thus can be used as a phosphate fertilizer or a raw material thereof.

The present invention is described hereinafter by way of Examples.

1. Example 1 (production of phosphorus recovery material)

Tap water at the amount shown in Table 1 was divided into two halves and each half was added to a sodium silicate aqueous solution (sodium silicate solution No. 3) and slaked lime at the amounts shown in Table 1, respectively, and stirred to prepare a diluted sodium silicate aqueous solution and slurry of slaked lime. The diluted solution and the slurry were then mixed at a Ca/Si formulation molar ratio shown in Table 1 and stirred at 20°C for 1 hour to give a phosphorus recovery material (each of samples 1 to 6) having a Ca/Si molar ratio shown in Table 1. The Ca/Si molar ratio as used herein is the molar ratio between Ca in the slaked lime and Si in the sodium silicate aqueous solution mixed therewith.

For comparison, a phosphorus recovery material (sample 7) was prepared with using siliceous shale (extracted in Hokkaido, content of alkali-soluble $SiO_2$: 45 wt%) instead of the sodium silicate aqueous solution. Specifically, 0.5 wt% (outer percentage) of NaOH was added to tap water which was heated to 70°C. Siliceous shale was then added thereto and the mixture was stirred at 70°C for 1 hour to dissolve alkali-soluble silica of the siliceous shale. Slaked lime at the amount so as to have a Ca/Si molar ratio of 1.0 was added to the solution containing the dissolved silica and heated to 70°C for 3 hours to hydrothermally synthesize the phosphorus recovery material. Because insoluble residues of the siliceous shale were immediately settled, decantation followed for separation of the insoluble residues and a supernatant to give the phosphorus recovery material suspended in the supernatant.

Each of the phosphorus recovery materials was measured for the Ca/Si molar ratio according to JIS R 5202 "Methods for chemical analysis of Portland cement". The phosphorus recovery material was also measured for the BET specific surface area and the pore volume using a sample obtained after vacuum deaeration at 150°C for 1 hour by the nitrogen adsorption method (BJH method) on a specific surface area analyzer (ASAP-2400, available from Micrometrics Instrument Corporation). The results are shown in Table 1.

An XRD chart of the sample 3 which is dry powder having a Ca/Si molar ratio of 1.1 is shown in Fig. 2. As shown in this chart, the sample 3 has a sole peak of CSH.

[Table 1]

| Sample | Ca/Si molar ratio | proportion of raw materials | | | | Phosphorus recovery material | | |
|---|---|---|---|---|---|---|---|---|
| | | Silicate | | Slaked lime (g) | Tap water (g) | Ca/Si molar ratio | Specific surface area ($m^2$/g) | Pore volume ($cm^3$/g) |
| | | Type | Silicate (g) | | | | | |
| 1 | 0.5 | Sodium silicate aqueous solution | 55.8 | 10 | 244 | 0.5 | 85 | 0.35 |
| 2 | 0.8 | | 34.9 | 10 | 265 | 0.8 | 78 | 0.30 |
| 3 | 1.0 | | 27.9 | 10 | 272 | 1.1 | 62 | 0.26 |
| 4 | 1.5 | | 18.6 | 10 | 281 | 1.5 | 58 | 0.25 |
| 5 | 2.0 | | 14.0 | 10 | 286 | 2.1 | 52 | 0.24 |
| 6 | 3.0 | | 9.3 | 10 | 291 | 3.0 | 48 | 0.21 |
| 7 | 1.0 | Siliceous shale | 16.3 | 10 | 210 | 1.1 | 58 | 0.25 |

2. Example 2 (phosphorus recovery test)

Filtrate of excess sludge from a sewage treatment plant (phosphorus concentration ($P_0$) : 100 mg/L and total carbonic acid concentration in terms of $CO_2$: 1400 mg/L) was used as water containing phosphorus and carbonic acid.

The Filtrate (100 mL) was mixed with each of the slurries (reaction solutions) of phosphorus recovery materials of samples 1 to 6, the suspension of the phosphorus recovery material of sample 7 and slaked lime powder as a reference so as to obtain a Ca/P molar ratio of 2 between the amount of calcium in the phosphorus recovery material or slaked lime and the amount of phosphorus in the Filtrate. Thereafter the mixed liquid was stirred at a liquid temperature of 20°C for 1 hour to fix phosphorus to the phosphorus recovery material or the like.

A portion (5 mL) of the mixed liquid was filtered through the filter paper No. 5C and measured for the phosphorus concentration ($P_1$) in the filtrate and the phosphorus fixation index ($R_1$) was determined.

The residual mixed liquid was placed in a 100-mL graduated cylinder and left to stand for 1 hour. Thereafter the upper layer suspension liquid (60 mL) was separated by decantation. Hydrochloric acid was added to the separated suspension to adjust pH to 1 followed by stirring to dissolve the suspended substances. Thereafter, the solution was measured for the phosphorus concentration ($P_2$), and the phosphorus fixation index ($R_2$) and further the sedimentation index (S) were determined.

For comparison, a test was carried out in the same manner as above, by using phosphorus-containing water (phosphorus concentration ($P_0$) : 100 mg/L and total carbonic acid concentration in terms of $CO_2$ after decarbonation treatment: 79.8 mg/L) which was obtained after decarbonation treatment by adding hydrochloric acid to the above Filtrate to adjust pH to 5.3, and the phosphorus fixation index ($R_1$) was determined. The above results are shown in Table 2.

The phosphorus concentration was measured according to the molybdenum blue absorptiometry defined in JIS K 0102 "Testing methods for industrial wastewater". The total carbonic acid concentration was measured on a total organic carbon analyzer (TOC-Vcsn: available from Shimadzu Corporation) operated in the inorganic carbon (IC) mode.

[Table 2]

| Sample | Ca/Si molar ratio | Phosphorus fixation index (%) | | | Sedimentation index (%) |
|---|---|---|---|---|---|
| | | without decarbonation treatment | | with decarbonation treatment | |
| | | $R_1$ | $R_2$ | $R_1$ | |
| 1 | 0.5 | 62 | 62 | 65 | 100 |
| 2 | 0.8 | 83 | 82 | 90 | 99 |
| 3 | 1.1 | 84 | 83 | 91 | 99 |
| 4 | 1.5 | 75 | 71 | 92 | 95 |
| 5 | 2.1 | 53 | 48 | 93 | 91 |
| 6 | 3.0 | 43 | 35 | 92 | 81 |
| 7 | 1.1 | 60 | 55 | 91 | 92 |
| Slaked lime | - | 18 | 10 | 92 | 56 |

3. Phosphorus fixation index ($R_1$) and sedimentation index

It is found from Table 2 that the phosphorus recovery material of the present invention has a significantly high fixing ability of phosphorus because the phosphorus fixation index without decarbonation treatment was 62% for both sample 1 having a Ca/Si molar ratio of 0.5 and sample 5 having the ratio of 2.1 and was 43% for sample 6 having the ratio of 3.0, while the index was 75 to 84% for samples 2 to 4 having the ratio in the range of 0.8 to 1.5. Sample 7 which was prepared from siliceous shale had a low phosphorus fixation index of 60%, although sample 7 had a Ca/Si molar ratio of 1.1.

With decarbonation treatment, samples 2 to 4 had a phosphorus fixation index of 90 to 92%, and thus the phosphorus recovery material of the present invention has almost the same level of fixing ability of phosphorus without decarbonation treatment as that obtained with decarbonation treatment.

In addition, it is found from Table 2 that the phosphorus recovery material of the present invention has an increased sedimentation property because the sedimentation index was 91% for sample 5 having a Ca/Si molar ratio of 2.1 and 81% for sample 6 having the ratio of 3.0%, while the index was 95 to 99% for samples 2 to 4 having the ratio in the range of 0.8 to 1.5. Thus the phosphorus recovery material of the present invention after fixation of phosphorus has a high sedimentation property in phosphorus-containing water even in the absence of decarbonation treatment.

Sample 1 having a Ca/Si molar ratio of 0.5 has a high sedimentation property of 100% while it has low phosphorus fixation index of 62%. Slaked lime has both a low phosphorus fixation index of 18% and sedimentation index of 56%.

From the above results, it is demonstrated that the phosphorus recovery material of the present invention has an excellent phosphorus recovery capability. The phosphorus recovery material of the present invention can also be applied to any kind of phosphorus-containing water and can be suitably used at sewage treatment plants of any kind of system without requiring pretreatment.

**Claims**

1.   A phosphorus recovery material comprising an amorphous calcium silicate hydrate single substance or a complex between amorphous calcium silicate hydrate and $Ca(OH)_2$, produced by mixing a sodium silicate aqueous solution and lime without heating, wherein the hydrate single substance or the complex has a Ca/Si molar ratio of 0.8 to 1.5.

2.   The phosphorus recovery material according to claim 1, having a phosphorus fixation index of 70% or more.

3.   The phosphorus recovery material according to claim 1 or 2, having a sedimentation index of 95% or more.

4.   A method for producing a phosphorus recovery material, comprising mixing a sodium silicate aqueous solution and lime without heating to produce an amorphous calcium silicate hydrate single substance or a complex between the amorphous calcium silicate hydrate and $Ca(OH)_2$ having a Ca/Si molar ratio of 0.8 to 1.5.

5.   A phosphorus recovery method comprising mixing water containing phosphorus and carbonic acid and the phosphorus recovery material according to any one of claims 1 to 3, separating solid and liquid and recovering phosphorus as a solid matter.

6.   The phosphorus recovery method according to claim 5, wherein the phosphorus recovery material in the form of slurry is used.

Fig. 1

Fig. 2

## INTERNATIONAL SEARCH REPORT

| | International application No. |
|---|---|
| | PCT/JP2013/064444 |

### A. CLASSIFICATION OF SUBJECT MATTER

*C02F1/58(2006.01)i, C01B25/00(2006.01)i, C01B33/24(2006.01)i, C05B7/00 (2006.01)i, C05F7/00(2006.01)i*

According to International Patent Classification (IPC) or to both national classification and IPC

### B. FIELDS SEARCHED

Minimum documentation searched (classification system followed by classification symbols)
C02F1/58, C01B25/00, C01B33/24, C05B7/00, C05F7/00

Documentation searched other than minimum documentation to the extent that such documents are included in the fields searched

| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-285636 A (Onoda Chemical Industry Co., Ltd.),<br>10 December 2009 (10.12.2009),<br>claims; paragraphs [0018] to [0062] | 1,2,5<br>1-6 |
| X<br>Y | JP 2009-285635 A (Onoda Chemical Industry Co., Ltd.),<br>10 December 2009 (10.12.2009),<br>claims; paragraphs [0018] to [0074] | 1,2<br>1-6 |
| Y | JP 10-218638 A (Minerals Technologies Inc.),<br>18 August 1998 (18.08.1998),<br>claims; paragraphs [0014] to [0023] | 1-6 |
| Y | JP 10-165922 A (Yoichi NISHIMURA),<br>23 June 1998 (23.06.1998),<br>claims; paragraphs [0014] to [0021] | 1-6 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 June, 2013 (12.06.13) | 25 June, 2013 (25.06.13) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 857 361 A1**

**INTERNATIONAL SEARCH REPORT**

| International application No. |
| --- |
| PCT/JP2013/064444 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-285089 A (Kurimoto Ltd.), 07 October 2003 (07.10.2003), claims; paragraphs [0010] to [0021] | 1-6 |
| A | JP 1-103914 A (Denki Kagaku Kogyo Kabushiki Kaisha), 21 April 1989 (21.04.1989), claims; page 1, lower left column, line 11 to page 2, lower right column, line 13 | 1-6 |

Form PCT/ISA/210 (continuation of second sheet) (July 2009)

12

## INTERNATIONAL SEARCH REPORT
Information on patent family members

International application No.

PCT/JP2013/064444

| | | | |
|---|---|---|---|
| JP 2009-285636 A | 2009.12.10 | (Family: none) | |
| JP 2009-285635 A | 2009.12.10 | (Family: none) | |
| JP 10-218638 A | 1998.08.18 | JP 2002-128527 A | 2002.05.09 |
| | | JP 2001-527019 A | 2001.12.25 |
| | | US 6271159 B1 | 2001.08.07 |
| | | US 6287378 B1 | 2001.09.11 |
| | | US 6287997 B1 | 2001.09.11 |
| | | EP 826630 A2 | 1998.03.04 |
| | | EP 1051370 A | 2000.11.15 |
| | | WO 1999/033765 A1 | 1999.07.08 |
| | | DE 826630 T | 1998.09.24 |
| | | DE 69708789 D | 2002.01.17 |
| | | DE 69708789 T | 2002.07.04 |
| | | PL 321920 A | 1998.03.16 |
| | | ES 2116958 T | 1998.08.01 |
| | | BR 9704592 A | 1998.11.03 |
| | | CA 2214363 A | 1998.03.03 |
| | | IL 121641 D | 1998.02.08 |
| | | MX 9706682 A | 1998.07.31 |
| | | AU 2099199 A | 1999.07.19 |
| | | NO 20003394 A | 2000.08.29 |
| | | PL 341349 A | 2001.04.09 |
| | | TW 422823 B | 2001.02.21 |
| | | BR 9814514 A | 2001.09.25 |
| | | SK 9342000 A | 2001.04.09 |
| | | CA 2317124 A | 1999.07.08 |
| | | IL 136606 A | 2003.10.31 |
| | | AU 756269 B | 2003.01.09 |
| | | CN 1283170 A | 2001.02.07 |
| | | CN 1834048 A | 2006.09.20 |
| | | AU 2002313128 B | 2005.04.14 |
| | | IL 121641 D0 | 1998.02.08 |
| JP 10-165922 A | 1998.06.23 | (Family: none) | |
| JP 2003-285089 A | 2003.10.07 | (Family: none) | |
| JP 1-103914 A | 1989.04.21 | (Family: none) | |

Form PCT/ISA/210 (patent family annex) (July 2009)

**INTERNATIONAL SEARCH REPORT**

| International application No. |
|---|
| PCT/JP2013/064444 |

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
    A technical feature common among the inventions in claims 1-6 of the present application is considered to be the material for recovering phosphorus in claim 1. However, the material for recovering phosphorus in claim 1 is described in JP 2009-285636 A (Onoda Chemical Industry Co., Ltd.), 10 December 2009 (10.12.2009), claims; paragraphs [0018] to [0040] (Family: none) and JP 2009-285635 A (Onoda Chemical Industry Co., Ltd.), 10 December 2009 (10.12.2009), claims; paragraphs [0018] to [0037] (Family: none). (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2013/064444

Continuation of Box No.III of continuation of first sheet(2)

Consequently, the above-said technical feature cannot be considered to be a special technical feature since the technical feature does not make a contribution over the prior art, and there is no other same or corresponding special technical feature among these inventions.

Therefore, the present application does not comply with the requirement of unity of invention.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61263636 B
- JP H02020315 B
- JP H10235344 B
- JP 2000135493 A
- JP 2009285635 A
- JP 2009285636 A
- JP 2004174386 A
- JP 3569086 B